# EUROPEAN PATENT APPLICATION

(11) **EP 4 510 459 A1**
(43) Date of publication of application: **19.02.2025**
(21) Application number: 22941106.1
(22) Date of filing: 11.05.2022
(51) Int. Cl.: H04B 1/401

(54) **ELECTRONIC DEVICE AND COMMUNICATION SYSTEM**

(71) Applicant: Huawei Technologies Co., Ltd., Shenzhen, Guangdong 518129 (CN)
(72) Inventor: CUI, Keji, Shenzhen, Guangdong 518129 (CN); GAO, Peng, Shenzhen, Guangdong 518129 (CN); YU, Yongchang, Shenzhen, Guangdong 518129 (CN)
(74) Representative: Goddar, Heinz J.
(86) International application number: PCT/CN2022/092234
(87) International publication number: WO 2023/216148

(57) **Abstract**

The present disclosure provides an electronic device and a communication system. The electronic device includes a power divider array that includes a general input port and a plurality of branch output ports. The power divider array has a filter mode and a power splitter mode that are switchable. In the power splitter mode, the power divider array is configured to implement power distribution of a signal from the general input port to the plurality of branch output ports. In the filter mode, the power divider is configured to filter a signal transmitted between the general input port and the plurality of branch output ports. By using the power divider array that can switch an operating mode, board-level routing complexity can be reduced for the electronic device. Reduction of board-level routing complexity facilitates miniaturization of the electronic device and reduction of design difficulty.

## Description

### TECHNICAL FIELD

The present disclosure relates to the field of communication systems, and specifically, to an electronic device and a communication system.

### BACKGROUND

A radio frequency (radio frequency, RF) is a high-frequency alternating-current changing electromagnetic wave, and indicates an electromagnetic frequency that can be radiated to space. A radio frequency chip is an electronic component that communicatively converts a radio signal into a specific radio signal waveform and sends the waveform through resonance of an antenna. The radio frequency chip usually includes a power amplifier, a low-noise amplifier, and an antenna switch. An architecture of the radio frequency chip usually includes two parts: a receiving channel and a transmitting channel.

A frequency of a modulation/demodulation (baseband) signal may differ greatly from that of a radio frequency signal. In this case, a plurality of frequency conversion stages may be needed. In these cases, an intermediate frequency (intermediate frequency, IF) is generated in an up-conversion stage/a down-conversion stage between the radio frequency signal and the baseband signal. The intermediate frequency, as the name implies, indicates a signal form of an intermediate frequency. The intermediate frequency is a concept relative to the baseband signal and the radio frequency signal. The intermediate frequency can have one or more stages, and is a bridge between a baseband and the radio frequency. To enable stable operation of an amplifier and reduce interference, usually, a receiver needs to convert a high-frequency signal into an intermediate-frequency signal.

With vigorous development of 5G communication technologies, to increase a transmission/reception distance of a transceiver such as a millimeter-wave radio frequency transceiver, a multi-array switching manner or a multi-chip arraying manner is usually used for radio frequency transceivers. The multi-array switching manner or the multi-chip arraying manner is usually driven by an intermediate-frequency transceiver. In conventional solutions, an intermediate-frequency drive network using this mode usually has high design complexity, high costs, a transient power jump, and other problems.

### SUMMARY

The present disclosure relates to technical solutions of an intermediate-frequency drive network, and specifically provides an electronic device such as an intermediate-frequency transceiver and a communication system using the electronic device.

According to a first aspect of the present disclosure, an electronic device is provided. The electronic device includes a power divider array that includes a general input port and a plurality of branch output ports. The power divider array has a filter mode and a power splitter mode that are switchable. In the power splitter mode, the power divider array is configured to implement power distribution of a signal from the general input port to the plurality of branch output ports. In the filter mode, the power divider array is configured to filter a signal transmitted between the general input port and the plurality of branch output ports. By setting the power divider array that can switch an operating mode, board-level routing complexity can be reduced for the electronic device in this embodiment of the present disclosure. Reduction of board-level routing complexity facilitates miniaturization of the electronic device and reduction of design difficulty.

In an implementation, the power divider array includes a first power divider array and a second power divider array. The first power divider array and the second power divider array each include at least one power divider. Each of the at least one power divider includes a mode switching circuit. The mode switching circuit is configured to switch an operating mode of the power divider array.

In an implementation, the power divider switches between a first mode and a second mode based on a status of the mode switching circuit. The first mode corresponds to the power splitter mode, and the second mode corresponds to the filter mode.

In an implementation, each power divider further includes: a power divider input port, a first radio frequency side port, and a second radio frequency side port; a pair of transmission lines with equal equivalent lengths, respectively disposed between the first radio frequency side port and the power divider input port and between the second radio frequency side port and the power divider input port; and a resistor branch, including a resistor coupled between the first radio frequency side port and the second radio frequency side port.

In an implementation, the mode switching circuit includes: a first switch, connected in series with the resistor in the resistor branch; and a pair of regulation branches, respectively coupled to the first radio frequency side port and the second radio frequency side port and configured to regulate a ground impedance. In this way, mode switching of the power divider array is implemented by using a simple circuit.

In an implementation, the regulation branch includes: a first capacitor and a second switch that are connected in series and coupled between the first radio frequency side port and a reference ground; and a second capacitor and a third switch that are connected in series and coupled between the second radio frequency side port and the reference ground. In this manner, an implementation of the mode switching circuit is further simplified, to further reduce costs.

In an implementation, the regulation branch has a characteristic of a low-pass filter and is configured to filter out high-frequency noise. In this manner, the power divider array can implement a low-pass filter mode.

In an implementation, the power divider switches between the first mode and the second mode based on statuses of the first switch, the second switch, and the third switch; and in the first mode, a signal input from the power divider input port is divided into two channels of signals to be respectively output through the first radio frequency side port and the second radio frequency side port; and in the second mode, the first radio frequency side port is configured with no signal output, and a signal transmission branch between the second radio frequency side port and the power divider input port is configured with a low-pass filter characteristic.

In an implementation, in the first mode, the first switch is turned on, and the second switch and the third switch are turned off; and in the second mode, the first switch is turned off, one of the second switch and the third switch is turned off, and the other one of the second switch and the third switch is turned on.

In some implementations, the at least one power divider includes a plurality of stages of power dividers that are connected in a cascading manner. The plurality of stages of power dividers include a first-stage power divider. A power divider input port of a power divider in the first-level power divider is used as the general input port of the power divider array. A first radio frequency side port and a second radio frequency side port of each power divider in a final-stage power divider in the plurality of stages of power dividers are used as branch output ports of the power divider array.

In an implementation, the plurality of stages of power dividers further includes: a stage-N power divider, including 2^{(N-1)} pairs of power dividers. Power divider input ports of every two power dividers of the stage-N power divider are respectively coupled to a first radio frequency side port and a second radio frequency side port of one power divider of a previous-stage power divider. Herein, N is an integer greater than 1.

In an implementation, the electronic device further includes: a first diplexer, including a first input port, a second input port, and an output port, where the first input port of the first diplexer is configured to receive a control data signal, the second input port of the first diplexer is configured to receive a first intermediate-frequency signal, and the output port of the first diplexer is configured to couple to a general input port of the first power divider array; and a second diplexer, including a third input port, a fourth input port, and an output port, where the third input port of the second diplexer is configured to receive a clock signal, the fourth input port of the second diplexer is configured to receive a second intermediate-frequency signal, and the output port of the second diplexer is configured to couple to a general input port of the second power divider array.

In an implementation, the equivalent length of the transmission line is a quarter of a center wavelength corresponding to a frequency of an intermediate-frequency signal processed by the power divider.

In an implementation, the power divider array is configured to implement equal power distribution of the signal from the general input port to the plurality of branch output ports.

In an implementation, frequencies of the first intermediate-frequency signal and the second intermediate-frequency signal at least partially overlap.

In an implementation, the electronic device is an intermediate-frequency transceiver.

According to a second aspect of the present disclosure, a communication system is provided. The communication system includes: the electronic device described in the first aspect above; and a plurality of radio frequency transceivers, coupled to branch output ports of a power divider array of the electronic device.

In some implementations, a first input port of a first diplexer of the electronic device is configured to receive a control data signal, a second input port of the first diplexer is configured to receive a first intermediate-frequency signal, and an output port of the first diplexer is configured to couple to a general input port of a first power divider array of the electronic device. A third input port of a second diplexer of the electronic device is configured to receive a clock signal, a fourth input port of the second diplexer is configured to receive a second intermediate-frequency signal, and an output port of the second diplexer is configured to couple to a general input port of a second power divider array of the electronic device. Each radio frequency transceiver is coupled to corresponding branch output ports of the first power divider array and the second power divider array. By using the electronic device including the power divider array that can switch an operating mode, board-level routing complexity can be reduced for the communication system including a plurality of radio frequency transceiver arrays.

In some implementations, the communication system operates in a small cell mode when a power divider in the electronic device operates in a first mode, or the communication system operates in a user terminal mode when a power divider operates in a second mode.

It should be understood that the content described in the summary is not intended to limit a key or important characteristic of the present disclosure, and is not intended to limit the scope of the present disclosure. The following descriptions facilitate understanding of other characteristics of the present disclosure.

### BRIEF DESCRIPTION OF DRAWINGS

The foregoing and other objects, characteristics, and advantages of embodiments of the present disclosure become easily understood by reading the following detailed descriptions with reference to the accompanying drawings. In the accompanying drawings, several embodiments of the present disclosure are shown by way of example instead of limitation.
FIG. 1 to FIG. 4 show routing manners of a phased array system in a conventional solution by using an example;
FIG. 5 shows a routing manner of a phased array system including an electronic device according to an embodiment of the present disclosure;
FIG. 6(A), FIG. 6(B), and FIG. 6(C) are a diagram of a conventional power divider and a power divider according to an embodiment of the present disclosure;
FIG. 7 is a diagram of simulation results of a power divider according to an embodiment of the present disclosure; and
FIG. 8(A) to FIG. 8(C), and FIG. 9 are diagrams of operating modes of a power divider array according to an embodiment of the present disclosure.

Throughout all the accompanying drawings, same or similar reference numerals represent same or similar components.

### DESCRIPTION OF EMBODIMENTS

The following describes the principle and spirit of the present disclosure with reference to several example embodiments shown in the accompanying drawings. It should be understood that these specific embodiments are described merely to enable a person skilled in the art to better understand and implement the present disclosure, but are not intended to limit the scope of the present disclosure in any manner. In the following descriptions and claims, unless otherwise defined, all technical and scientific terms used in this specification have meanings as those commonly understood by a person of ordinary skill in the art to which this specification belongs.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may indicate different objects or a same object, and are merely used to distinguish between specified objects, but do not imply a specific spatial order, a time order, an importance order, or the like of the specified objects.

The term "circuit" used in this specification indicates one or more of the following: (a) a hardware-only circuit implementation (such as an analog-only circuit implementation and/or a digital-only circuit implementation); (b) a combination of a hardware circuit and software, for example (if applicable): (i) a combination of an analog hardware circuit and/or a digital hardware circuit and software/firmware, and (ii) any part of a hardware processor and software (including a digital signal processor, software, and a memory that work together to enable an apparatus, such as a communication device or another electronic device, to perform various functions); and (c) a hardware circuit and/or a processor, such as a microprocessor or a part of a microprocessor, which requires software (such as firmware) to be used for operations but may not have software when software is not needed for operations. The definition of the circuit is applicable to all usage scenarios of the term in this application (including the claims). In another example, the term "circuit" used herein also covers an implementation of a hardware-only circuit or a processor (or a plurality of processors), or a part of a hardware circuit or a processor, or accompanying software or firmware. For example, if applicable to a particular claim element, the term "circuit" also covers a baseband integrated circuit or a processor integrated circuit, a network device, a terminal device, or a similar integrated circuit in another device.

It should be understood that in this application, "coupling" may be understood as direct coupling and/or indirect coupling. The direct coupling may also be referred to as an "electrical connection", which may be understood as physical contact and electrical conductivity of components; or may be understood as a form in which different components in a line structure are connected by using a physical line that can transmit an electrical signal, like printed circuit board (printed circuit board, PCB) copper foil or a conducting wire. The "indirect coupling" may be understood as electrical conductivity of two conductors across space or in a non-contact manner. In an embodiment, the indirect coupling may also be referred to as capacitive coupling. For example, an equivalent capacitance is formed through coupling via a gap between two spaced conductive components, to implement signal transmission.

A transmission line, also referred to as a feeder, indicates a connection line between a transceiver of an antenna and a radiator. The transmission line can directly transmit current waves or electromagnetic waves with different frequencies and forms. A connection point, on a radiator, connected to the transmission line is usually referred to as a feed point. The transmission line includes a conducting transmission line, a coaxial transmission line, a waveguide, a microstrip, or the like. The transmission line may include a support antenna body, a glass antenna body, or the like according to different implementation forms. The transmission line may be implemented by using LCP (liquid crystal polymer, liquid crystal polymer material), an FPC (flexible printed circuit, flexible printed circuit), a PCB (printed circuit board, printed circuit board), or the like based on different carriers.

A reference ground/ground plane may generally indicate at least a part of the following in an electronic device: any ground layer, ground surface, ground plate, or ground metal layer, or the like, or at least a part of any combination of any ground layer, ground plate, or ground part, or the like. The "reference ground/ground plane" may be used to ground a component in the electronic device, for example, a ground reference point applicable to providing a radio frequency signal, and may include a direct current ground and an alternating current ground. In an embodiment, the "reference ground/ground plane" may be a ground layer of a circuit board of the electronic device, or may be a ground plate formed by a middle frame of the electronic device, or a ground metal layer formed by a thin metal film below a screen of the electronic device. In an embodiment, a circuit board includes a dielectric substrate, a ground layer, and a routing layer. The routing layer and the ground layer are electrically connected through a via. In an embodiment, components such as a display, a touchscreen, an input button, a transmitter, a processor, a memory, a battery, a charging circuit, and a system-on-chip (system-on-chip, SoC) structure may be mounted on or connected to a circuit board, or electrically connected to a routing layer and/or a ground layer in the circuit board. For example, a radio frequency source is disposed at the routing layer.

Resonance frequency band/communication frequency band/operating frequency band: Regardless of a type of an antenna, the antenna operates in a specific frequency range (bandwidth). For example, an operating frequency band of an antenna supporting a B40 frequency band includes a frequency ranging from 2300 MHz to 2400 MHz. In other words, the operating frequency band of the antenna includes the B40 frequency band. The frequency range that meets a requirement of an indicator may be regarded as the operating frequency band of the antenna. A width of the operating frequency band is referred to as an operating bandwidth. An operating bandwidth of an omnidirectional antenna may reach 3% to 5% of a center frequency. An operating bandwidth of a directional antenna may reach 5% to 10% of a center frequency. A bandwidth may be considered as a range of frequencies on both sides of a center frequency (for example, a resonance frequency of a dipole). An antenna characteristic is within a range of acceptable values around the center frequency.

dB means decibel, and is a logarithm concept with a base of 10. The decibel is used only to evaluate a proportional relationship between one physical quantity and another physical quantity, and has no physical dimension. When a ratio of the two quantities is 10 each time, a difference between the two quantities can be expressed as 10 decibels. For example, if A=" 100", B="10", C="5", and D=" 1", A/D=20 dB, B/D=10 dB, C/D=7 dB, and B/C=3 dB. In other words, a difference of 10 decibels between two quantities means a difference of 10 times, a difference of 20 decibels between two quantities means a difference of 100 times, and so on. A difference of 3 dB means a difference of two times between two quantities.

Equivalent length: Due to a transmission distance, a specified capacitance and/or inductance, a radiation impedance, and another factor, a phase difference is caused when an electromagnetic wave is transmitted on a transmission medium. If the caused phase difference is the same as a phase difference caused when a guided wave is transmitted on a transmission line that has a predetermined length, has a predetermined dielectric constant, and does not have a radiation capability, an equivalent length of transmission on the transmission medium is equal to the predetermined length of the transmission line. The equivalent length may be affected by a physical length of a corresponding transmission line in the transmission medium, a capacitor and/or an inductor disposed in the transmission medium, a specified location at which a phase shifter is coupled to a radiator, a specified location at which the transmission line is coupled to the radiator, and the like. Specifically, by disposing the capacitor or the inductor, a physical length can be shortened when the equivalent length basically remains unchanged. For example, by disposing a device such as the capacitor or the inductor, a relationship between the physical length L and the equivalent length Le may satisfy: (1-1/3)Le≤L≤(1+1/3)Le, or (1-1/4)Le≤L≤(1+1/4)Le.

A baseband/baseband signal may also be understood as an inherent frequency band (frequency bandwidth) of an original electrical signal that is sent by a " source" (an information source, also referred to as a transmitting terminal) and that is not modulated (spectrum shifting and conversion), and is referred to as a basic frequency band, that is, a baseband for short. The baseband corresponds to the frequency band. The frequency band is a frequency bandwidth occupied by the baseband signal before modulation (a difference between the lowest frequency and the highest frequency occupied by a signal). The baseband is a signal with a very narrow frequency range. To be specific, an amplitude spectrum is non-zero only near an origin (f=0), and other frequencies can be almost ignored. In telecommunication and signal processing, the baseband signal is transmitted without modulation. To be specific, a frequency range of the signal is not shifted and a frequency is very low. The baseband signal includes a frequency band from near 0 Hz to a higher cut-off frequency or a frequency band with a maximum bandwidth. The word "baseband" is also used to indicate a communication module (modem) of a mobile phone, or corresponding control software (firmware).

A radio frequency (radio frequency, RF) is a high-frequency alternating current changing electromagnetic wave, and indicates an electromagnetic frequency that can be radiated to space. A radio frequency chip is an electronic component that converts radio signal communication into a specific radio signal waveform and sends the waveform through resonance of an antenna. The radio frequency chip usually includes a power amplifier, a low-noise amplifier, and an antenna switch. An architecture of the radio frequency chip usually includes two parts: a receiving channel and a transmitting channel.

Intermediate frequency (intermediate frequency, IF): A frequency of a modulation/demodulation (baseband) signal may differ greatly from that of a radio frequency signal. In this case, a plurality of frequency conversion stages may be needed. In these cases, an intermediate frequency is generated in an up-conversion stage/a down-conversion stage between the radio frequency signal and the baseband signal. The intermediate frequency, as the name implies, indicates a signal form of an intermediate frequency. The intermediate frequency is a concept relative to the baseband signal and the radio frequency signal. The intermediate frequency can have one or more stages, and is a bridge between the baseband and the radio frequency. To enable stable operation of an amplifier and reduce interference, usually, a receiver needs to convert a high-frequency signal into an intermediate-frequency signal.

A phased array is a directional antenna including many radiating elements arranged in an array. Radiation energy and phase relationship of the elements can be controlled. For a typical phased array, a phase shifter is controlled by using an electronic computer to change phase distribution on an antenna aperture, thereby implementing beam scanning in space, that is, electronic scanning, or electro-scanning for short. A phase method, a real-time method, a frequency method, and an electronic feed switching method may be used for phase control. Radiating elements arranged in one dimension form a linear array. Radiating elements arranged in two dimensions form a planar array. Radiating elements may be arranged on a curve or on a curved surface. This antenna is referred to as a conformal array antenna. A shortcoming of a small scanning angle of the linear array and the planar array can be overcome by using the conformal array antenna. In this way, all-space electronic scanning can be implemented by using one antenna. Common conformal array antennas include an annular array, a circular array, a conical array, a cylindrical array, a hemispherical array, and the like.

Diplexer (diplexer): A diplexer is a passive device that implements frequency-domain multiplexing. Two ports (for example, L and H) are multiplexed onto a third port (for example, S). Signals on the ports L and H occupy disjoint frequency bands. Therefore, the signals on the ports L and H can coexist on the port S without interfering with each other. The diplexer allows two signal paths to be used on the same transmission line (for example, an antenna). This is implemented by using a filter that separates frequencies of interest. The diplexer allows two signals of different frequencies (for example, a control signal and a communication signal) to be transmitted and received from the same antenna.

A multiplexer, also referred to as a data selector or a mux, is a device that can select one signal from a plurality of analog or digital input signals for output. A data selector with 2ⁿ input ends has n selectable input-output paths. One of the signals may be selected as an output by using a control end. The data selector is mainly used to increase a volume of data that can be sent over a network within a specific amount of time and a specific bandwidth.

A power divider is a device that divides one channel of input signal power into two or more channels of equal or unequal output power. The power divider may also combine a plurality of channels of signal power into one channel for output. In this case, the power divider may also be referred to as a combiner. A Wilkinson power divider is a common power divider that uses a transmission line of a 1/4 wavelength. The Wilkinson power divider has many advantages: (1) easy to implement; (2) low costs; and (3) good isolation between ports.

An insertion loss, an insert loss for short, is a power loss or a gain loss caused when some components or branch circuits (filters, impedance matchers, and the like) are added to a circuit. The insertion loss is a load power loss caused due to insertion of an element or a component in a transmission system. The insertion loss is expressed in decibels as a ratio of power received on a load before insertion of the element or the component to power received on the same load after the insertion.

A high-impedance state, also referred to as a high-impedance state, is a common term in a digital circuit and is an output state of a component. The high-impedance state is equivalent to a blocking state. When a component is in the high-impedance state, regardless of how an input of the component changes, the change does not contribute to an output of the component. The opposite is a low-impedance state. The low-resistance state is equivalent to a short-circuit state. An input of a component affects an output.

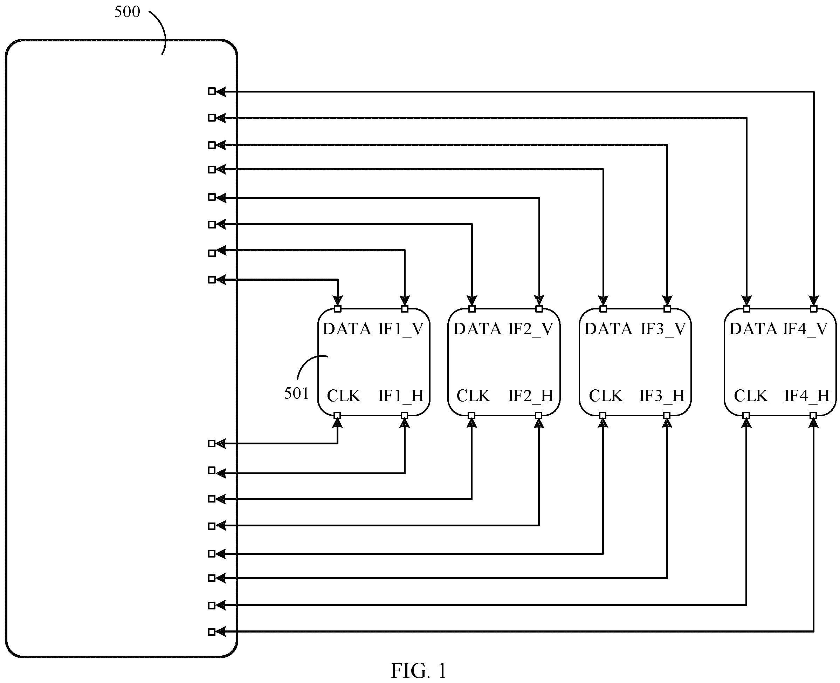

In a 5G communication system, to increase a transmission/reception distance of a radio frequency transceiver, a multi-array switching manner or a multi-chip arraying manner is usually used for a plurality of radio frequency transceivers. To facilitate control of radiation energy and a phase relationship of each radio frequency transceiver, the radio frequency transceiver and an intermediate-frequency drive network driven by an intermediate-frequency transceiver are shown in FIG. 1. In the figure, the intermediate-frequency transceiver drives a lower-stage radio frequency transceiver. The intermediate-frequency drive network shown in FIG. 1 may be used in a terminal application scenario or a small cell scenario. When used in a terminal application scenario such as a mobile phone, radio frequency transceivers or specific radiating elements of radio frequency transceivers respectively points to different directions to improve a spatial coverage range. In addition, switching is performed among the four radio frequency transceivers, to select a radio frequency transceiver with an appropriate direction to operate. In the small cell scenario, a multi-chip arraying manner is usually used for the radio frequency transceivers to improve a transmission equivalent isotropic radiated power (equivalent isotropically radiated power, EIRP) and a reception sensitivity. For example, four radio frequency transceiver chips may be arrayed to form a 1x4 (as shown in FIG. 1) or a 2x2 array. In this manner, for a transmitting side, an EIRP may be increased by 12 dB; and for a receiving side, a sensitivity may be increased by 6 dB. Therefore, the transmission/reception distance can be greatly increased in the arraying manner of radio frequency transceiver chips. In addition, in the small cell scenario, to implement arraying effect, phase synchronization usually needs to be implemented for a plurality of radio frequency transceiver chips. Therefore, intermediate-frequency driving needs to be synchronized for a plurality of radio frequency transceivers.

It can be learned from FIG. 1 that in a scenario in which four (four is used only as an example) radio frequency transceivers 501 drive dual-polarized antennas, each radio frequency transceiver chip needs two intermediate-frequency inputs (IF_V and IF _H) to drive dual-polarized outputs of the radio frequency transceiver chip. In addition, each chip needs at least two digital lines to control inputs: respectively, a data (DATA) input and a clock (CLOCK, CLK) input. Therefore, an intermediate-frequency transceiver chip 500 needs to drive eight intermediate-frequency lines and eight digital lines, which greatly increases design difficulty of board-level routing.

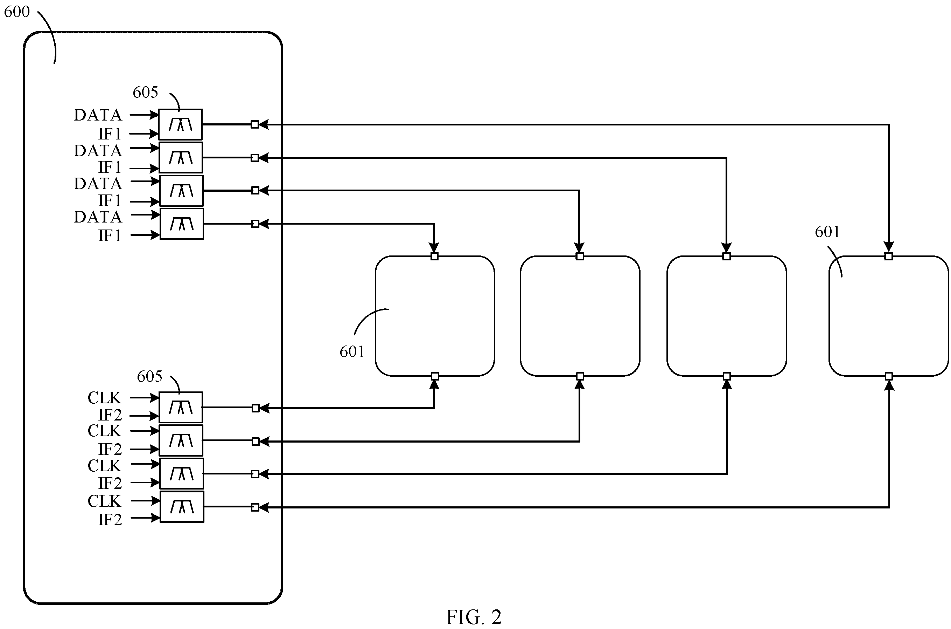

In some embodiments, to reduce board-level routing complexity, as shown in FIG. 2, diplexers 605 are integrated inside an intermediate-frequency transceiver 600. In some alternative embodiments, the diplexers 605 may be alternatively implemented by external components. The diplexer 605 combines an intermediate-frequency communication signal (usually a frequency is greater than 1 GHz) and a digital control signal (usually a frequency is less than 1 GHz) into one output. In addition, an input of a radio frequency transceiver chip is further correspondingly adjusted, so that the radio frequency transceiver chip can receive and process a control signal while receiving and processing a communication signal. Therefore, a quantity of wires between the intermediate-frequency transceiver 600 and each radio frequency transceiver 601 is reduced to two. The method can be adopted in both a user terminal scenario and a small cell scenario. According to the method, routing complexity is reduced by a half.

However, there are also various problems in using this method. For example, the diplexer 605 is costly because the diplexer 605 is manufactured by using special processes such as an integrated passive device (integrated passive device, IPD). Eight diplexers 605 are used in a solution of using only four radio frequency transceivers 601. As a result, costs are high. In addition, because the intermediate-frequency transceiver 600 in this solution outputs a plurality of intermediate-frequency communication signals, in a user terminal scenario, usually, only a single radio frequency transceiver needs to operate. In this case, a redundant intermediate-frequency drive stage design does not facilitate reduction of costs in the user terminal scenario and the like.

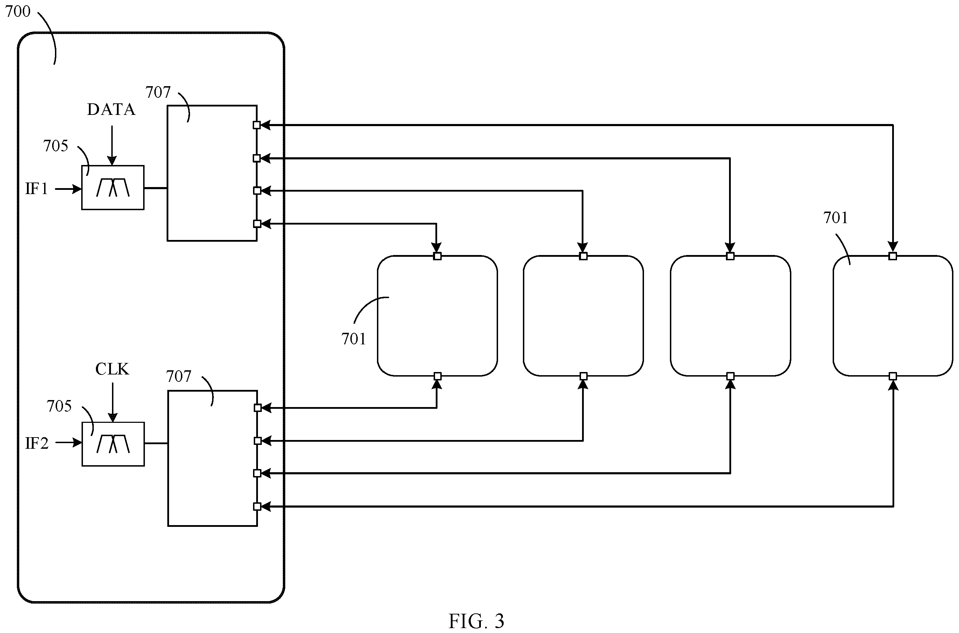

In some embodiments, to reduce high costs caused by the diplexer, as shown in FIG. 3, an intermediate-frequency transceiver 700 uses an architecture based on a diplexer and a power divider. In these embodiments, only two diplexers 705 are used in one intermediate-frequency transceiver, each diplexer drives a one-to-four power divider 707, and the power dividers 707 drive four radio frequency transceiver chips 701. In a user terminal scenario and a small cell scenario, in this solution, a power divider may be used to drive a plurality of radio frequency transceiver chips.

In the user terminal scenario, for an intermediate-frequency drive network using this architecture, when only one radio frequency transceiver 701 operates, a disabling impedance of an intermediate-frequency input port in each of other disabled radio frequency transceiver chips 701 needs to be appropriately designed, to avoid impact on the operating radio frequency transceiver. This additional design of the intermediate-frequency input port significantly increases design complexity of a circuit. In addition, in the user terminal scenario, output power of the intermediate-frequency transceiver 700 needs to be maintained and driven at the same power in a small cell mode due to an insertion loss introduced by the power dividers 707. This increases power consumption in a user terminal mode.

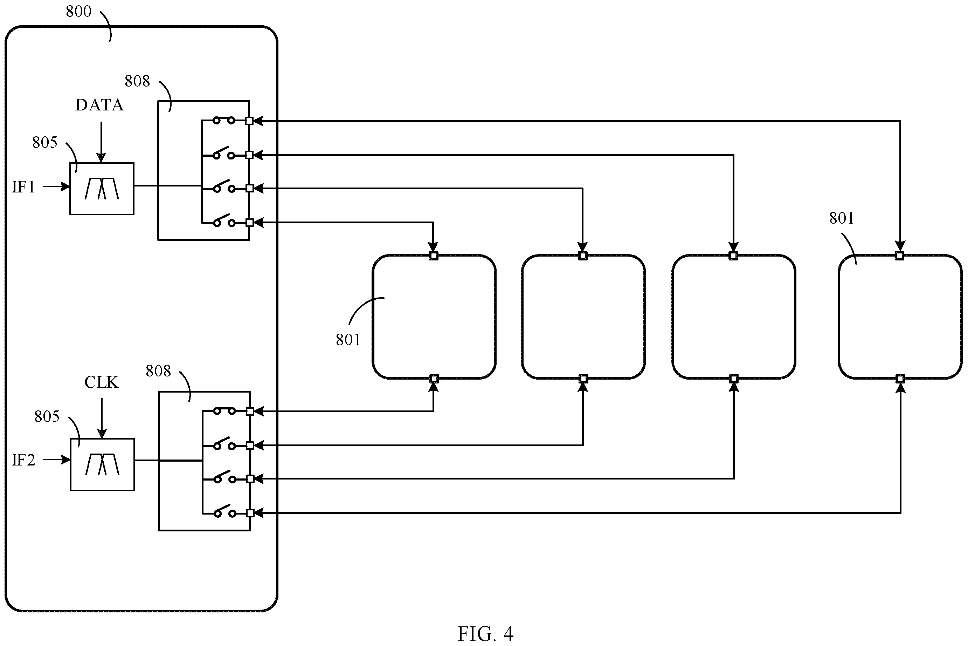

In some embodiments, as shown in FIG. 4, an intermediate-frequency transceiver 800 in another solution uses diplexers 805 and switch architectures 808. One intermediate-frequency transceiver 800 includes two diplexers 805. This is the same as the solution mentioned above. The 4-to-1 switch assembly 808 is connected to the diplexer 805. Four outputs of the switch assembly 808 are respectively connected to four radio frequency transceivers 801. In the user terminal mode, only one switch in a 4-to-1 switch is turned on, and other switches are turned off. Array switching of the radio frequency transceiver 801 is implemented by controlling on/off of different switches.

However, the intermediate-frequency transceiver 800 using the architecture shown in FIG. 4 can be used only in the user terminal scenario, but cannot be used in the small cell scenario. In addition, in the user terminal scenario, if a first radio frequency transceiver chip is kept on, and array switching needs to be performed, the other radio frequency transceiver chip needed in the switching needs to be pre-started (digital and analog enabled, and radio frequency disabled). In this case, switches, in switch assemblies, corresponding to the first radio frequency transmitter chip and the other needed radio frequency transmitter chip need to be turned on at the same time. This causes a transient power jump of the first radio frequency transmitter chip, thereby causing a transient error vector magnitude (error vector magnitude, EVM) problem.

To resolve or at least partially resolve the existing or other potential problems in the foregoing technical solutions, an embodiment of the present disclosure provides an electronic device such as an intermediate-frequency transceiver. The electronic device can support requirements of both the user terminal scenario and the small cell scenario. Board-level routing complexity of a multi-chip array in a phased array system can be significantly reduced with low costs and low complexity. In addition, in the user terminal mode of the electronic device in this embodiment of the present disclosure, an intermediate-frequency drive network has a low insertion loss, which helps reduce power consumption.

It should be understood that a user terminal to which the electronic device in this embodiment of the present disclosure is applicable may include customer premise equipment (customer premise equipment, CPE). The CPE is a signal relay device. The CPE can relay a Wi-Fi signal; and can further relay, by using a built-in subscriber identity module (subscriber identification module, SIM) card, a 4G or 5G network signal transmitted by a base station of an operator, and then converts the 4G or 5G signal into a Wi-Fi signal for other devices to connect to. The CPE is similar to a small cell in form, and usually needs to drive a plurality of radio frequency transceiver chips to operate at the same time.

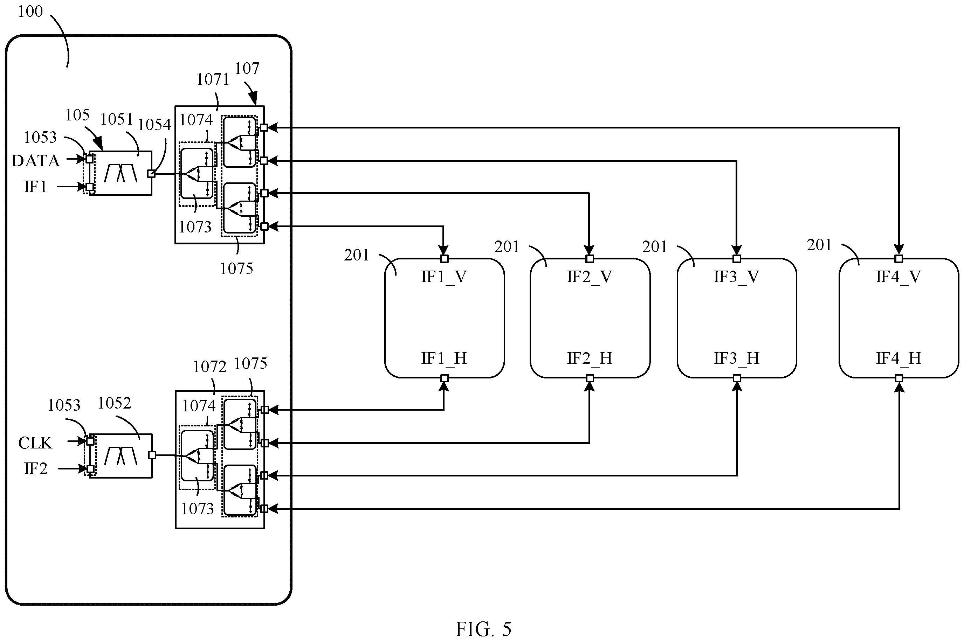

FIG. 5 is a diagram of an intermediate-frequency drive network in an architecture of an electronic device according to an embodiment of the present disclosure. It can be learned from FIG. 5 that the intermediate-frequency drive network in this embodiment of the present disclosure includes an electronic device such as an intermediate-frequency transceiver. The electronic device includes power divider arrays 107. In the embodiment shown in FIG. 5, the electronic device 100 may further include diplexers 105 coupled to the power divider arrays 107. For the diplexers 105, each diplexer 105 includes two input ports (that is, baseband-side ports 1053) respectively coupled to a control signal processor and a communication signal (that is, an intermediate-frequency signal) processor. For example, in some embodiments, as shown in FIG. 5, the electronic device may include two diplexers 105. The two diplexers 105 may be respectively referred to as a first diplexer 1051 and a second diplexer 1052. A data port providing a control data (DATA) signal in the control signal processor is coupled to a first input port of the first diplexer 1051, and a clock port providing a clock (clock, CLK) signal is coupled to a third input port of the second diplexer 1052. In addition, the first diplexer 1051 further has a second input port coupled to a first communication signal processor, and the first communication signal processor is configured to provide a first intermediate-frequency (intermediate frequency, IF) signal. The second diplexer 1052 further has a fourth input port coupled to a second communication signal processor, and the second communication signal processor is configured to provide a second intermediate-frequency signal. The first intermediate-frequency signal and the second intermediate-frequency signal may be in the same frequency band or similar frequency bands. For example, in some embodiments, frequencies of communication signals provided by the first communication signal processor and the second communication signal processor at least partially overlap.

Certainly, it should be understood that the embodiment in which the electronic device uses the two diplexers 105 is merely an example, and is not intended to limit the protection scope of the present disclosure. Depending on a port to be connected, it is also possible for the electronic device to include any other appropriate quantity of diplexers 105. The following mainly describes an inventive concept of the present disclosure by using an example in which the electronic device includes the two diplexers 105 shown in FIG. 5. It should be understood that an electronic device having another quantity of diplexers 105 has a similar case. Details are not separately described below.

The power divider array 107 has a general input port and a plurality of branch output ports. Each general input port is coupled to an output port 1054 of the diplexer 105. The plurality of branch output ports are respectively coupled to a plurality of radio frequency transceivers 201. FIG. 5 shows two power divider arrays respectively corresponding to the first diplexer 1051 and the second diplexer 1052, that is, a first power divider array 1071 and a second power divider array 1072. The output port 1054 of the first diplexer 1051 is coupled to the general input port of the first power divider array 1071, and the output port of the second diplexer 1052 is coupled to the general input port of the second power divider array 1072. As shown in FIG. 5, four branch output ports of the first power divider array 1071 are respectively coupled to first feed interfaces IF I_V, IF2_V, IF3_V, and IF4_V of four radio frequency transceivers 201, and four branch output ports of the second power divider array 1072 are respectively coupled to second feed interfaces IF1_H, IF2_H, IF3_H, and IF4_H of the four radio frequency transceivers 201. It should be understood that, if there are another quantity of diplexers 105, there may be a corresponding quantity of power divider arrays 107.

Different from a conventional electronic device, the power divider array 107 in the electronic device in this embodiment of the present disclosure may operate in a filter mode and a power splitter mode. Switching may be performed between the two modes by using a specific circuit (this is further described below). In the power splitter mode, the power divider array 107 can implement power distribution of a signal from a general input port to a plurality of branch output ports. For example, in some embodiments, the power divider array 107 can implement equal power distribution of the signal from the general input port to the plurality of branch output ports. In the filter mode, the power divider array 107 can be configured to filter a signal transmitted between the general input port and the plurality of branch output ports. In some embodiments, in the filter mode, some of the plurality of branch output ports are configured with no signal output, while a signal transmitted between the general input port and the other output ports presents a low-pass filter characteristic. This will be further described below with reference to the accompanying drawings. According to the electronic device 100 in this embodiment of the present disclosure, by disposing the power divider array 107 that can switch an operating mode, complexity of board-level routing used between an intermediate frequency and a radio frequency can be reduced for the electronic device 100. Reduction of board-level routing complexity facilitates miniaturization of the electronic device and even an entire communication system and reduction of design difficulty.

Each power divider array 107 includes at least one power divider 1073. As shown in FIG. 5, each power divider array 107 includes three power dividers 1073 connected in a cascading manner. The following describes an inventive concept of the present disclosure mainly by using an example in which each power divider array 107 shown in FIG. 5 includes the three power dividers 1073. It should be understood that, depending on a quantity of radio frequency transceivers 201 that need to be connected, another quantity of power dividers 1073 is also possible. This is further described below.

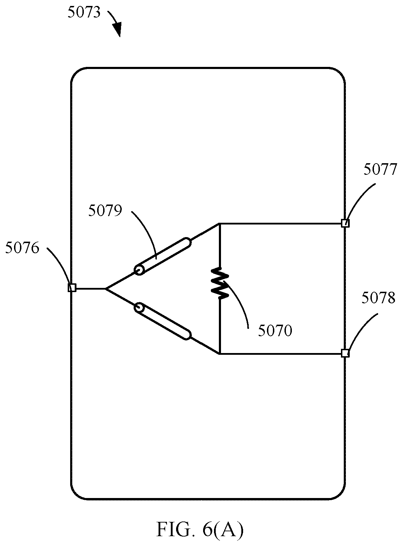

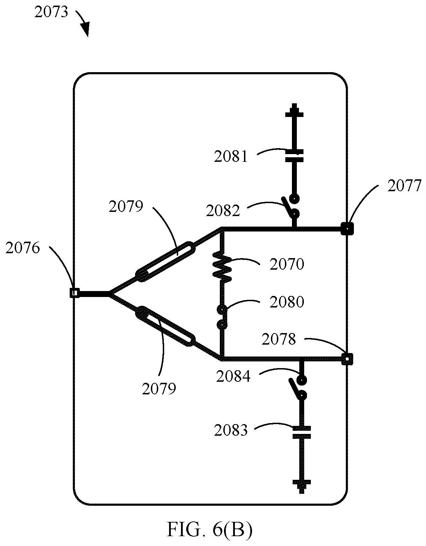

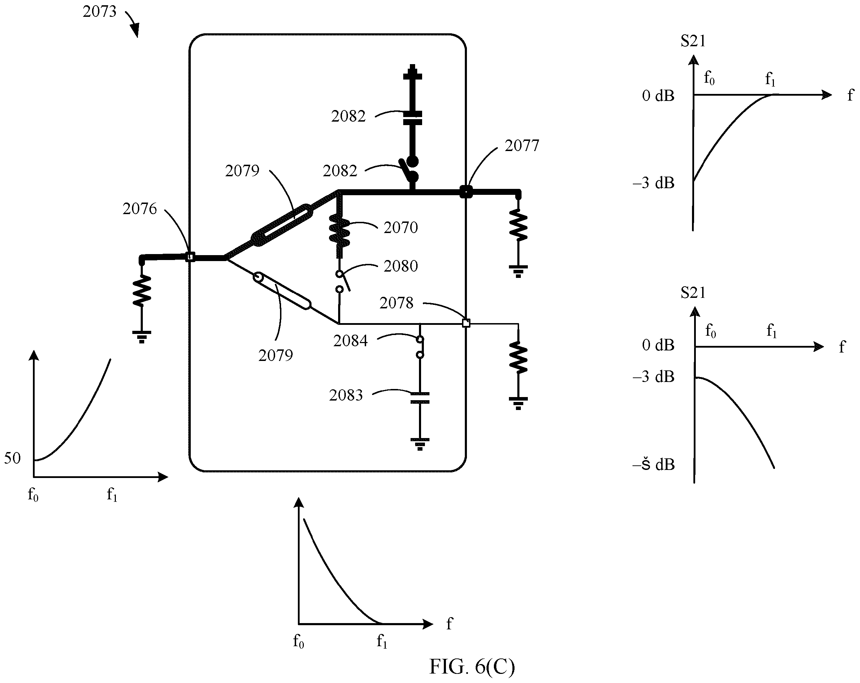

Each power divider 1073 uses an improved power divider that includes a mode switching circuit. In this way, an operating mode of the power divider array 107 can be switched. The power divider array 107 can implement at least two modes, that is, the power splitter mode and the filter mode. The following describes improvement of the power divider 2073 and principles of implementing the two modes with reference to FIG. 6(A), FIG. 6(B), and FIG. 6(C). FIG. 6(A) shows a conventional Wilkinson power divider 5073. Generally, the Wilkinson power divider 5073 is implemented by using two transmission lines 5079 of a quarter wavelength. Each transmission line 5079 may be made of a microstrip. A characteristic impedance of the transmission line is V2Zo. A basic function of the two transmission lines is to evenly distribute input power input by a power divider input port 5076 to two output ports (that is, a first radio frequency side port 5077 and a second radio frequency side port 5078). In this case, both S21 and S32 are -3 dB (when the power divider causes no loss). In addition, to improve isolation between two output ports (that is, the first radio frequency side port 5077 and the second radio frequency side port 5078), a resistor 5070 is disposed between the first radio frequency side port 5077 and the second radio frequency side port 5078, and an impedance of the resistor is 2Zo, to improve the isolation between the two output ports 1054.

As shown in FIG. 6(B) and FIG. 6(C), compared with the conventional Wilkinson power divider 5073, a power divider 2073 used in the electronic device in this embodiment of the present disclosure further includes a mode switching circuit in addition to the foregoing components. To be specific, the power divider 2073 in this embodiment of the present disclosure includes a power divider input port 2076, a first radio frequency side port 2077, a second radio frequency side port 2078, and a pair of transmission lines 2079 with equal equivalent lengths. An equivalent length of each transmission line 2079 may be a quarter of a center wavelength corresponding to a frequency of a communication signal of the power divider. An impedance of the transmission line may be V2Zo. In addition, the power divider further includes a resistor branch. The resistor branch is coupled between the first radio frequency side port 2077 and the second radio frequency side port 2078, and includes a resistor 2070 with an impedance of 2Zo.

The mode switching circuit of the power divider 2073 in this embodiment of the present disclosure includes a switch (referred to as a first switch 2080 below) connected in series in the resistor branch, and regulation branches that are respectively added at the first radio frequency side port 2077 and the second radio frequency side port 2078. This is different from a conventional power divider. Each regulation branch is configured to regulate a ground impedance. In some embodiments, regulation of the ground impedance may be implemented by using a capacitor and a switch. Specifically, in some embodiments, the pair of regulation branches may include a first capacitor 2081 and a second switch 2082 that are coupled between the first radio frequency side port 2077 and a reference ground, and a second capacitor 2083 and a third switch 2084 that are coupled between the second radio frequency side port 2078 and the reference ground.

Certainly, it should be understood that this embodiment of implementing regulation of the ground impedance by using the capacitor and the switch is merely an example, and is not intended to limit the protection scope of the present disclosure. Any other appropriate implementation is also possible. The following describes an inventive concept of the present disclosure by mainly using an example in which the regulation branch is implemented by using the capacitor and the switch. It should be understood that another implementation has a similar case. Details are not described below.

By using the foregoing mode adjustment circuit, the power divider 2073 may switch between a first mode and a second mode. Specifically, when the first switch 2080 is turned on, and the second switch 2082 and the third switch 2084 are turned off, the power divider 2073 shown in FIG. 6(B) operates in the first mode. In this case, the power divider 2073 has a structure the same as that in FIG. 6(A). If all the power dividers 1073 in the power divider array 107 in FIG. 5 operate in the first mode, the power divider array 107 operates in the power splitter mode. In this case, a signal (regardless of whether the signal is a control signal or a communication signal) input from the general input port can be equally divided into a plurality of channels of signals to be respectively fed to the plurality of radio frequency transceivers 201 through the branch output ports.

When the first switch 2080 is turned off, one of the second switch 2082 and the third switch 2084 is turned off, and the other one of the second switch 2082 and the third switch 2084 is turned on, the power divider 2073 operates in the second mode. As shown in FIG. 6(C), if all the power dividers 1073 in the power divider array 107 in FIG. 5 operate in the second mode, the power divider array 107 operates in the filter mode. As shown in FIG. 6(C), when the first switch 2080 and the second switch 2082 are turned off, and the third switch 2084 is turned on, the second capacitor 2083 at the second radio frequency side port 2078 accesses a network. A characteristic of the second capacitor 2083 is that the second capacitor 2083 is in a high-resistance state, that is, near open-circuit, at a low frequency f0 (for example, less than or equal to a first frequency, for example, a frequency of a control signal), and is in a low-resistance state, that is, near short-circuit, at a high frequency f1 (for example, greater than or equal to a second frequency, where the first frequency is less than the second frequency, for example, a frequency of a communication signal). The first capacitor 2081 has a similar characteristic. In this manner, after the transmission line 2079 of a quarter wavelength, an impedance from the power divider input port 2076 to the second radio frequency side port 2078 is 50 ohms (close to a characteristic impedance at the second radio frequency side port 1078) at the low frequency f0, and is in the high-resistance state, that is, near open-circuit, at the high frequency f1. In this manner, the regulation branch has a characteristic of a low-pass filter and is configured to filter out high-frequency noise.

Certainly, it should be understood that FIG. 6(C) shows only one case in the second mode, that is, a case in which the first switch 2080 and the second switch 2082 are turned off, and the third switch 2084 is turned on. Based on statuses of the second switch 2082 and the third switch 2084, there is a second case, that is, a case in which the first switch 2080 and the third switch 2084 are turned off, and the second switch 2082 is turned on. This case is opposite to the case shown in FIG. 6(C). In addition, when the power divider array has a plurality of stages of power dividers, by combining statuses of switches of different stages of power dividers, more cases may be implemented based on a filter mode corresponding to the second mode of a single power divider. In this manner, a needed radio frequency transceiver can be excited in a controllable manner to operate.

Therefore, in the second mode (corresponding to the filter mode of the power divider array 107) shown in FIG. 6(C), for low-frequency signals such as a control signal (for example, a data control signal and a clock signal), an insertion loss from the power divider input port 2076 to the first radio frequency side port 2077 and that from the power divider input port 2076 to the second radio frequency side port 2078 are both near -3 dB. In this case, the control signal can be effectively transmitted to the radio frequency transceivers 201. For a high-frequency signal such as an intermediate-frequency communication signal, an insertion loss from the power divider input port 2076 to the second radio frequency side port 2078 is nearly infinite, and an insertion loss from the power divider input port 2076 to the first radio frequency side port 2077 is near 0 dB. Certainly, the filter mode in which the first switch 2080 and the third switch 2084 are turned off, and the second switch 2082 is turned on has a similar case. Details are not separately described below.

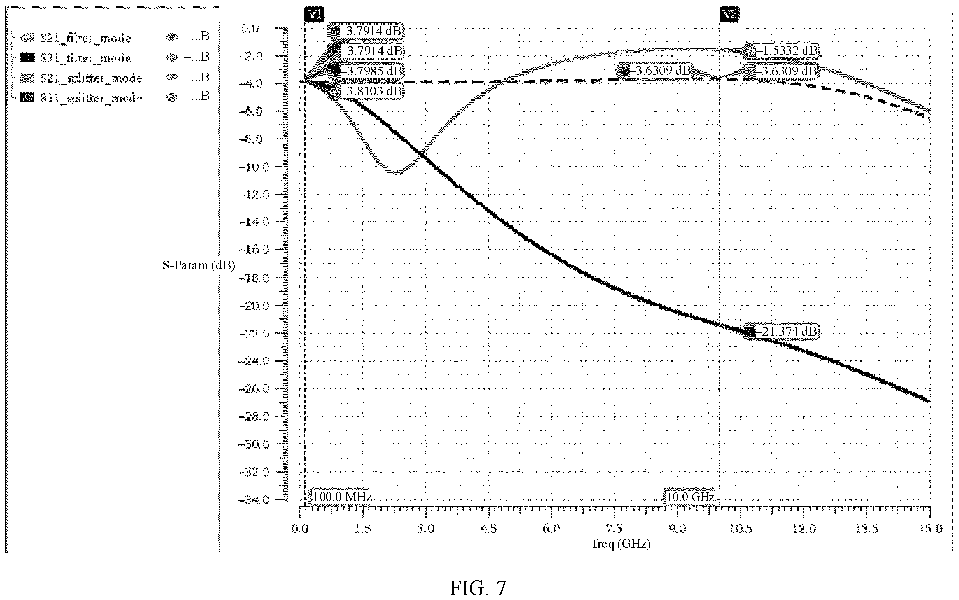

Simulation results of the power divider 2073 used in the electronic device in this embodiment of the present disclosure are shown in FIG. 7. For the simulation results, for example, a low-frequency digital signal is 0.1 GHz, and an intermediate-frequency signal is 10 GHz. A dashed line in the figure is a simulation result of the power divider 2073 in the first mode. In this case, as shown in FIG. 6(B), the insertion loss from the power divider input port 2076 to the first radio frequency side port 2077 and that from the power divider input port 2076 to the second radio frequency side port 2078 are both about -3.8 dB (cases at a high frequency and a low frequency are basically the same). In the second mode shown in FIG. 6(C), for a low-frequency signal such as a control signal, the insertion loss from the power divider input port 2076 to the first radio frequency side port 2077 and that from the power divider input port 2076 to the second radio frequency side port 2078 are still -3.8 dB. For a high-frequency signal such as an intermediate-frequency communication signal, the insertion loss from the power divider input port 2076 to the first radio frequency side port 2077 is about -1.5 dB. In other words, the insertion loss is reduced by about 2.3 dB in comparison with the insertion loss in the power splitter mode. The insertion loss of the insertion loss from the power divider input port 2076 to the second radio frequency side port 2078 is about -21 dB. In other words, at a low frequency f0, the power divider 2073 is still in the first mode; and at a high frequency f1, the power divider input port 2076 is directly connected to the first radio frequency side port 2077, and the power divider input port 2076 is short-circuited to the second radio frequency side port 2078. In this case, no signal is output from the first radio frequency side port, and a signal transmitted between the second radio frequency side port and the power divider input port presents a low-pass filter characteristic. In other words, the regulation branch has a characteristic of a low-pass filter, and is configured to filter out high-frequency noise, so that the signal transmitted between the second radio frequency side port and the power divider input port presents the low-pass filter characteristic.

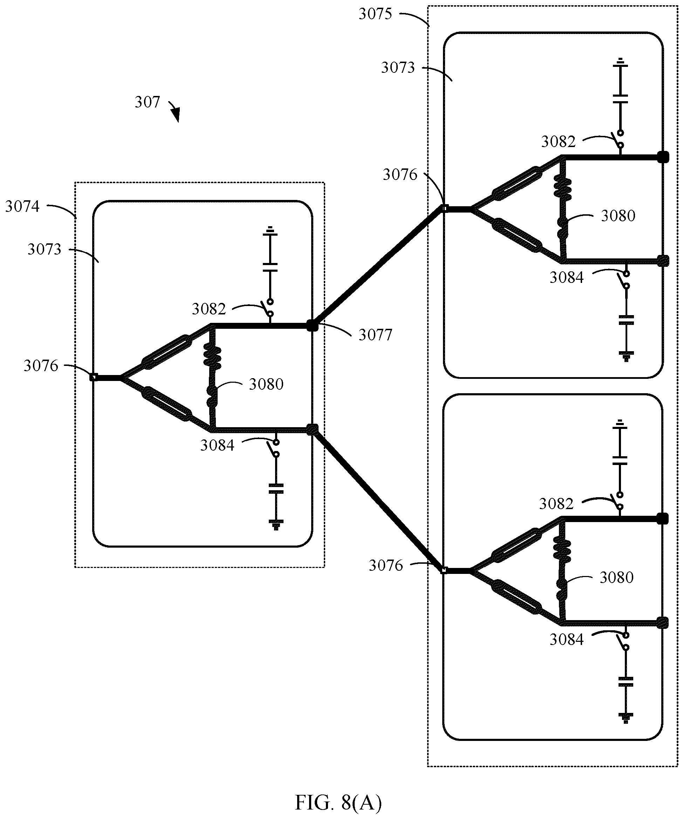

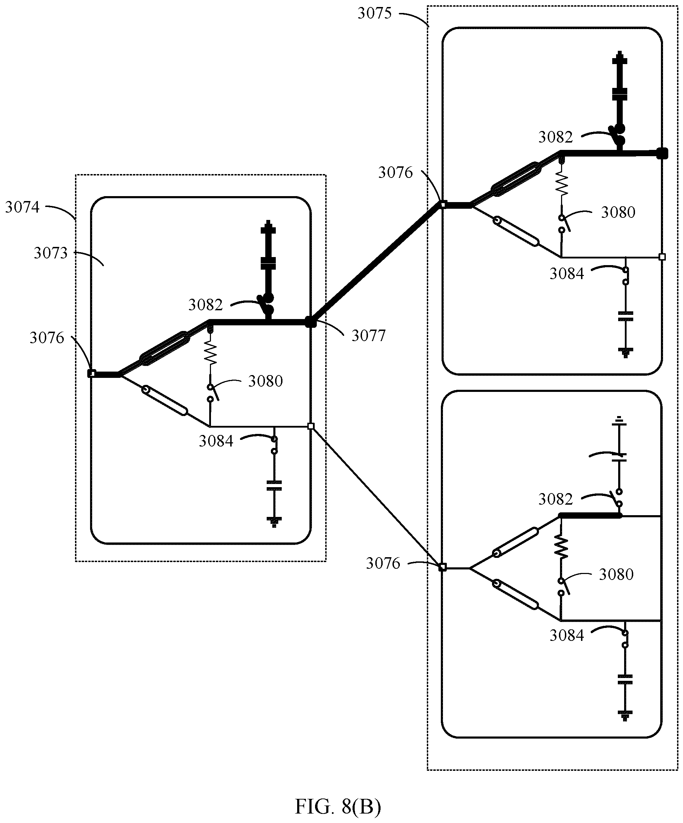

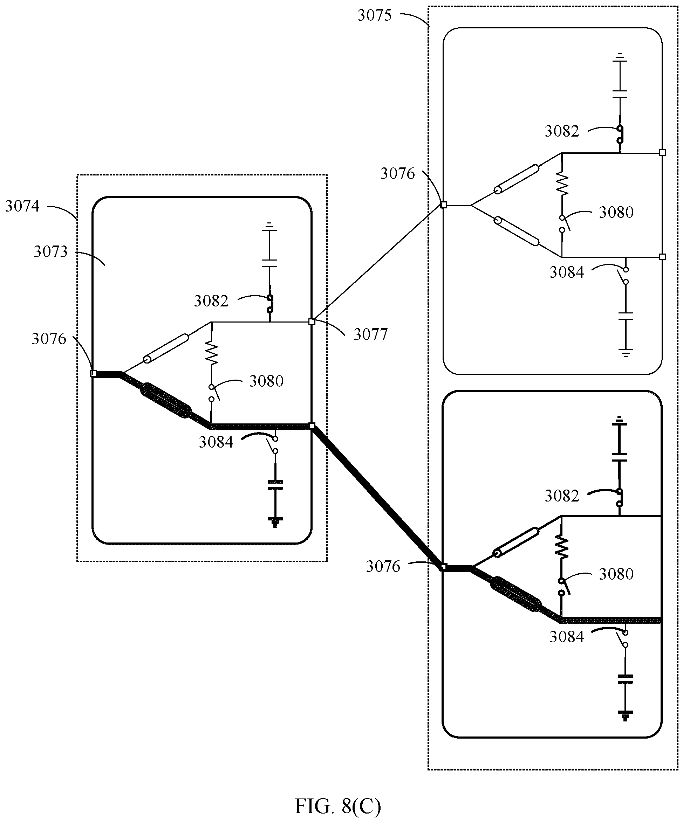

In this manner, in some embodiments, as mentioned above, the power divider array may be formed by cascading power dividers with two modes according to this embodiment of the present disclosure, and serve as an intermediate-frequency drive network of a phased array system. For example, four radio frequency transceivers are arrayed. As shown in FIG. 8(A), FIG. 8(B), and FIG. 8(C), for a one-to-four power divider network, a plurality of power dividers 3073 with two modes according to this embodiment of the present disclosure are cascading. FIG. 8(A), FIG. 8(B), and FIG. 8(C) show two stages of power dividers 3074 and 3075 that are connected in a cascading manner. A first-stage power divider 3074 includes one power divider 3073. A power divider input port 3076 of the power divider 3073 is coupled to an output port of a corresponding diplexer. A second-stage power divider 3075 includes two power dividers 3073. Power divider input ports 3076 of both the power dividers 3073 in the second-stage power divider 3075 are respectively coupled to the first radio frequency side port 3077 and the second radio frequency side port 3078 of the first-stage power divider 3074. Four radio frequency side ports of the second-stage power divider 3075 each are coupled to one port of four radio frequency transceivers. Other ports of the four radio frequency transceivers use a similar drive structure.

As shown in FIG. 8(A), when the power dividers 3073 in the two stages of power dividers 3074 and 3075 operate in the first mode, that is, a first switch 3080 is turned on and a second switch 3082 and a third switch 3084 are both turned off, in this case, a power divider array 307 operates in the power splitter mode, and the electronic device operates in the small cell mode. In this case, a signal (regardless of whether the signal is a control signal or a communication signal) input from a general input port can be equally divided into a plurality of channels of signals to be respectively fed to a plurality of radio frequency power dividers through branch output ports. As shown in FIG. 8(B), when the power dividers 3073 in the two stages of power dividers 3074 and 3075 all operate in the second mode, for example, the first switch 3080 is turned off, the second switch 3082 is turned off, and the third switch 3084 is turned on, in this case, the power divider array 307 operates in the filter mode, and the electronic device operates in the user terminal mode. In this case, by adjusting a status of a switch in a mode adjustment circuit in each power divider 3073 in the power divider array 307, a communication signal can be transmitted to a needed radio frequency transceiver, or a signal is transmitted by using a needed radio frequency transceiver to a baseband side for processing. In other words, the electronic device in this embodiment of the present disclosure can support operation of a plurality of radio frequency transceivers in both the user terminal mode and the small cell mode. In addition, in the user terminal mode, the electronic device has a low insertion loss, which helps reduce power consumption.

For example, in the user terminal mode, it is assumed that only one radio frequency transceiver (for example, the leftmost radio frequency transceiver in FIG. 5) needs to be excited. In this case, for the first power divider array 1071 shown in FIG. 5, only a setting manner shown in FIG. 8(C) needs to be used. To be specific, the first switch 3080 and the third switch 3084 of each power divider 3073 in the first-stage power divider 3074 and the second-stage power divider 3075 are turned off, and the second switch 3082 is turned on. For the second power divider array 1072 shown in FIG. 5, only a setting manner shown in FIG. 8(B) needs to be used for implementation. To be specific, the first switch 3080 and the second switch 3082 of each power divider 3073 in the first-stage power divider 3074 and the second-stage power divider 3075 are turned off, and the third switch 3084 is turned on. A case in which another radio frequency transceiver needs to be excited is similar, and can be implemented by only correspondingly adjusting a status of a switch.

Certainly, it should be understood that, for the manner shown in FIG. 5, a cascading manner of the power dividers 1073 in the electronic device in this embodiment of the present disclosure is described by using an example in which four radio frequency transceivers 201 are arrayed. When another quantity of radio frequency transceivers 201 are arrayed, only corresponding stages of power dividers 1073 need to be cascaded. For example, when two radio frequency transceivers 201 are driven, an architecture of only one stage of power divider 1073 needs to be used in an electronic device such as an intermediate-frequency transceiver. When eight radio frequency transceivers 201 need to be arrayed, an architecture of three stages of power dividers 1073 is needed. In other words, 2^{N} radio frequency transceivers 201 can be arrayed by using an architecture of N stages of power dividers 1073 in the electronic device.

The foregoing describes, by using an example, an embodiment in which each stage of power divider operates in a same mode when a structure in which a plurality of stages of power dividers are cascaded is used. It should be understood that this is merely an example, and is not intended to limit the protection scope of the present disclosure. Any other appropriate case is also possible. For example, in some embodiments, the plurality of stages of power dividers may separately use different modes.

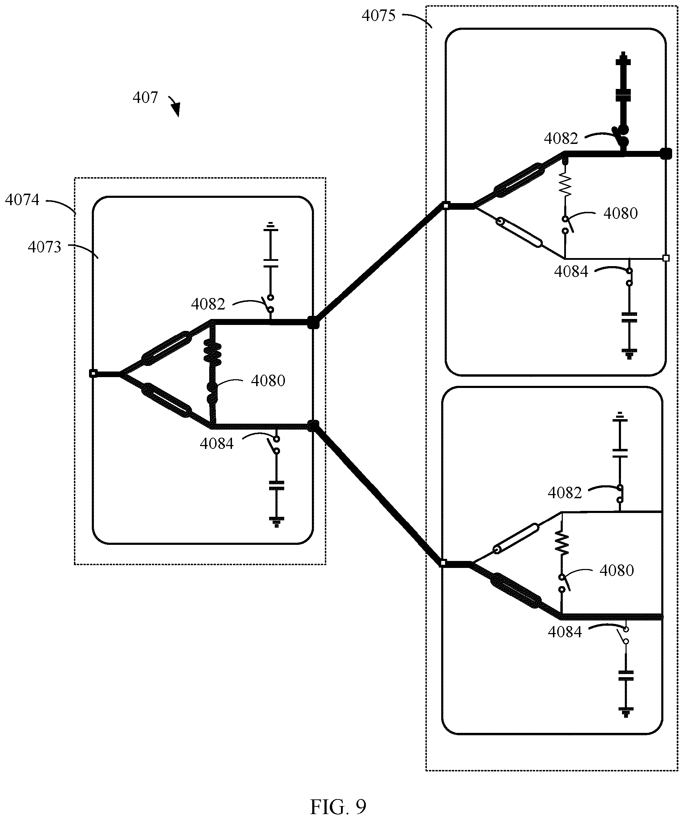

For example, in some embodiments, the first-stage power divider operates in the first mode, and the second-stage power divider operates in the second mode. For example, FIG. 9 shows a structure of two stages of power dividers that are connected in this cascading manner. A first switch 4080 of a power divider 4073 in a first-stage power divider 4074 is turned on, and a second switch 4082 and a third switch 4084 are both turned off. In other words, the power divider 4073 operates in the first mode. A first switch 4080 and a second switch 4082 of one power divider in a second-stage power divider 4075 are turned off, and a third switch 4084 is turned on, while a first switch 4080 and a third switch 4084 of the other power divider are turned off, and a second switch 4082 is turned on. In other words, the two power dividers operate in the second mode. In this case, an electronic device using a power divider array in this mode may drive two radio frequency transceiver chips to operate, to implement a needed function.

When the electronic device has a structure of two stages of power dividers or more stages of power dividers, each power divider in each stage of power divider may be configured to operate in any appropriate mode according to a requirement, to implement more different requirements and modes. For example, in a stage including a plurality of power dividers, some power dividers may operate in the first mode, and some power dividers may operate in the second mode, to implement different functions. This is not separately described below.

In this manner, by controlling a switch of a power divider in the electronic device in this embodiment of the present disclosure, the power divider array can switch between the power splitter mode and the filter mode, so that a network can support both the small cell mode and the user terminal mode. In addition, according to the electronic device, routing complexity of a multi-chip array of a phased array system is reduced with a small area and low costs. In addition, in the user terminal mode, a central drive network has a low insertion loss, which helps reduce power consumption. The electronic device in the embodiments of the present disclosure is widely used in various phased array systems. By appropriately setting a port impedance according to requirements, functions of a multiplexer, for example, spurious suppression, can be implemented.

Although this application has been described in language specific to structural features and/or methodological actions, it should be understood that the subject matter defined in the appended claims is not limited to the specific features or actions described above. Rather, the specific features and actions described above are disclosed as example forms of implementing the claims.

## Claims

1. An electronic device, comprising:
a power divider array, comprising a general input port and a plurality of branch output ports, wherein
the power divider array has a filter mode and a power splitter mode that are switchable; and in the power splitter mode, the power divider array is configured to implement power distribution of a signal from the general input port to the plurality of branch output ports; or in the filter mode, the power divider array is configured to filter a signal transmitted between the general input port and the plurality of branch output ports.

2. The electronic device according to claim 1, wherein the power divider array comprises a first power divider array and a second power divider array, the first power divider array and the second power divider array each comprise at least one power divider, each of the at least one power divider comprises a mode switching circuit, and the mode switching circuit is configured to switch an operating mode of the power divider array.

3. The electronic device according to claim 2, wherein the at least one power divider switches between a first mode and a second mode based on a status of the mode switching circuit, the first mode corresponds to the power splitter mode, and the second mode corresponds to the filter mode.

4. The electronic device according to claim 2 or 3, wherein each power divider further comprises:
a power divider input port, a first radio frequency side port, and a second radio frequency side port;
a pair of transmission lines with equal equivalent lengths, respectively disposed between the first radio frequency side port and the power divider input port and between the second radio frequency side port and the power divider input port; and
a resistor branch, comprising a resistor coupled between the first radio frequency side port and the second radio frequency side port.

5. The electronic device according to claim 4, wherein the mode switching circuit comprises:
a first switch, connected in series with the resistor in the resistor branch; and
a pair of regulation branches, respectively coupled to the first radio frequency side port and the second radio frequency side port and configured to regulate a ground impedance.

6. The electronic device according to claim 5, wherein the regulation branch comprises:
a first capacitor and a second switch that are connected in series and coupled between the first radio frequency side port and a reference ground; and
a second capacitor and a third switch that are connected in series and coupled between the second radio frequency side port and the reference ground.

7. The electronic device according to claim 5 and 6, wherein the regulation branch has a characteristic of a low-pass filter and is configured to filter out high-frequency noise.

8. The electronic device according to claim 6 or 7, wherein the power divider switches between the first mode and the second mode based on statuses of the first switch, the second switch, and the third switch; and
in the first mode, a signal input from the power divider input port is divided into two channels of signals to be respectively output through the first radio frequency side port and the second radio frequency side port; and
in the second mode, the first radio frequency side port is configured with no signal output, and a signal transmission branch between the second radio frequency side port and the power divider input port is configured with a low-pass filter characteristic.

9. The electronic device according to claim 8, wherein in the first mode, the first switch is turned on, and the second switch and the third switch are turned off; and
in the second mode, the first switch is turned off, one of the second switch and the third switch is turned off, and the other one of the second switch and the third switch is turned on.

10. The electronic device according to any one of claims 2 to 9, wherein the at least one power divider comprises a plurality of stages of power dividers that are connected in a cascading manner;
the plurality of stages of power dividers comprise:
a first-stage power divider, wherein the power divider input port of a power divider in the first-stage power divider is used as the general input port of the power divider array; and
a first radio frequency side port and a second radio frequency side port of each power divider in a final-stage power divider in the plurality of stages of power dividers are used as branch output ports of the power divider array.

11. The electronic device according to claim 10, wherein the plurality of stages of power dividers further comprise:
a stage-N power divider, comprising 2^{(N-1)} pairs of power dividers, wherein power divider input ports of every two power dividers of the stage-N power divider are respectively coupled to a first radio frequency side port and a second radio frequency side port of one power divider of a previous-stage power divider, and N is an integer greater than 1.

12. The electronic device according to any one of claims 2 to 11, further comprising:
a first diplexer, comprising a first input port, a second input port, and an output port, wherein the first input port of the first diplexer is configured to receive a control data signal, the second input port of the first diplexer is configured to receive a first intermediate-frequency signal, and the output port of the first diplexer is configured to couple to a general input port of the first power divider array; and
a second diplexer, comprising a third input port, a fourth input port, and an output port, wherein the third input port of the second diplexer is configured to receive a clock signal, the fourth input port of the second diplexer is configured to receive a second intermediate-frequency signal, and the output port of the second diplexer is configured to couple to a general input port of the second power divider array.

13. The electronic device according to any one of claims 2 to 12, wherein the equivalent length of the transmission line is a quarter of a center wavelength corresponding to a frequency of an intermediate-frequency signal processed by the power divider.

14. The electronic device according to claim 12, wherein frequencies of the first intermediate-frequency signal and the second intermediate-frequency signal at least partially overlap.

15. The electronic device according to any one of claims 1 to 14, wherein the power divider array is configured to implement equal power distribution of the signal from the general input port to the plurality of branch output ports.

16. The electronic device according to any one of claims 1 to 15, wherein the electronic device is an intermediate-frequency transceiver.

17. A communication system, comprising:
the electronic device according to any one of claims 1 to 16; and
a plurality of radio frequency transceivers, coupled to branch output ports of a power divider array of the electronic device.

18. The communication system according to claim 17, wherein a first input port of a first diplexer of the electronic device is configured to receive a control data signal, a second input port of the first diplexer is configured to receive a first intermediate-frequency signal, and an output port of the first diplexer is configured to couple to a general input port of a first power divider array of the electronic device;
a third input port of a second diplexer of the electronic device is configured to receive a clock signal, a fourth input port of the second diplexer is configured to receive a second intermediate-frequency signal, and an output port of the second diplexer is configured to couple to a general input port of a second power divider array of the electronic device; and
each radio frequency transceiver is coupled to corresponding branch output ports of the first power divider array and the second power divider array.

19. The communication system according to claim 17 or 18, wherein the communication system is configured so that the communication system operates in a small cell mode when a power divider in the electronic device operates in a first mode, or the communication system operates in a user terminal mode when a power divider operates in a second mode.
